# EUROPÄISCHE PATENTSCHRIFT

(11) **EP 1 664 558 B1**
(45) Veröffentlichungstag und Bekanntmachung des Hinweises auf die Patenterteilung: **10.09.2014**
(21) Anmeldenummer: 04765435.5
(22) Anmeldetag: 21.09.2004
(51) Int. Cl.: F16B 37/12, F16B 37/06

(54) **BEFESTIGUNGSELEMENT ZUR VERANKERUNG IN EINEM KURZEN, NICHT HINTERSCHNITTENEN SACKLOCH, ANORDNUNG MIT EINEM DERARTIGEN BEFESTIGUNGSELEMENT, VERFAHREN UND SETZWERKZEUG ZUR VERANKERUNG EINES DERARTIGEN BEFESTIGUNGSELEMENTS**
FASTENING ELEMENT TO BE ANCHORED IN A SHORT BLIND HOLE THAT IS NOT UNDERCUT, ARRANGEMENT COMPRISING SUCH A FASTENING ELEMENT, METHOD AND PLACEMENT TOOL FOR ANCHORING SUCH A FASTENING ELEMENT
ELEMENT DE FIXATION A ANCRER DANS UN TROU BORGNE COURT SANS CONTRE-DEPOUILLE, DISPOSITIF COMPRENANT UN TEL ELEMENT DE FIXATION ET PROCEDE ET OUTIL DE POSE POUR ANCRER UN TEL ELEMENT DE FIXATION

(30) Priorität: 26.09.2003 DE 10345118; 15.10.2003 DE 10348655; 13.11.2003 DE 10353237; 09.12.2003 DE 10357702; 26.01.2004 DE 102004003943
(43) Veröffentlichungstag der Anmeldung: 07.06.2006
(73) Patentinhaber: fischerwerke GmbH & Co. KG, 72178 Waldachtal (DE)
(72) Erfinder: FISCHER, Artur, 72178 Waldachtal (DE)
(74) Vertreter: Suchy, Ulrich Johannes
(86) Internationale Anmeldenummer: PCT/EP2004/010556
(87) Internationale Veröffentlichungsnummer: WO 2005/031176

(56) Entgegenhaltungen:
- WO-A-98/42988
- FR-A- 1 297 330
- FR-A- 2 289 789
- GB-A- 743 651
- US-A- 3 364 808
- US-A- 4 919 579

## Beschreibung

Die Erfindung betrifft ein Befestigungselement zur Verankerung in einem kurzen, nicht hinterschnittenen Sackloch gemäß dem Oberbegriff des Anspruchs 1 und eine Anordnung mit einem derartigen Befestigungselement gemäß dem Oberbegriff des Anspruchs 12. Das Befestigungselement ist insbesondere dazu vorgesehen, eine Befestigungsmöglichkeit an einem plattenförmigen Bauteil beispielsweise aus Baustahl zu schaffen, um ein weiteres Bauteil daran befestigen zu können. Dabei soll das plattenförmige Bauteil nicht durchbohrt werden, weswegen eine nur vergleichsweise kurze Verankerungstiefe zur Verfügung steht, insbesondere wenn ein Durchmesser des Sacklochs ungefähr gleich groß wie eine Dicke des Bauteils ist. Kurz ist im Verhältnis zum Durchmesser des Sacklochs zu verstehen.

Aus der FR 1 297 330 A ist ein Befestigungselement mit einer Spreizhülse und einem sich hohlrund aufweitenden Spreizkörper bekannt, der einstückig mit einem Schaft ist oder in den ein Schaft einschraubbar ist. Die Spreizhülse weist eine glockenförmige Mündung in dem Bereich auf, der zum Aufspreizen auf den Speizkörper aufgeschoben wird. Von Nachteil ist, dass die Spreizhülse nur linienförmig entlang einer Umfangslinie mit ihrer glockenförmigen Aufweitung am Spreizkörper anliegt. Sie wird deswegen nur in einem schmalen, umlaufenden Bereich nach außen gedrückt und vom Spreizkörper abgestützt. Eine möglichst großflächige, mit Kraft nach außen gedrückte Anlage an einer Wandung des Sacklochs ist damit nicht zu erreichen. Ein Mündungsbereich der Spreizhülse ist scharfkantig und dünnwandig und ist in aufgespreiztem Zustand nicht vom Spreizkörper abgestützt, der Mündungsbereich trägt deswegen zur Verankerung praktisch nichts bei. In einen harten Werkstoff formt sich die Spreizhülse nicht ein.

Einen vergleichbaren Stand der Technik offenbart die US 3,364,808 A. Diese Druckschrift beschreibt ein Spreizelement mit einem geschlitzten, dünnwandigen und sich trichterfömig aufweitenden Spreizbereich, dessen freier Rand beim Aufspreizen nach außen umgeformt wird und sich in eine Lochwand einschneiden soll. Das ist nur in einem weichen Werkstoff möglich. Die Verankerung erfolgt ausschließlich im Bereich des freien Randes, soweit er sich in die Lochwand einformt.

Die Spreizhülse der GB 743 651 A weist einen Rand auf, der nach Art einer Krone gezackt ist. Die Zacken drücken sich beim Aufspreizen in die Lochwand ein, was ebenfalls nur in einem weichen Werkstoff möglich ist.

Das Befestigungselement der FR 2 289 789 A, siehe Oberbegriff des Anspruchs 1 bzw. 12 der vorliegenden Erfindung weist einen Spreizkonus auf, der an seinem hinteren Ende über eine umlaufende Sollbruchstelle mit einer rohrförmigen Spreizhülse verbunden ist. Das hintere Ende ist das durchmesserkleinere Ende des Spreizkonus, der hohl ist und ein Innengewinde aufweist. Zum Aufspreizen wird die Spreizhülse axial beaufschlagt, so dass die Solltrennstelle bricht und die Spreizhülse auf den im Sackloch befindlichen Spreizkonus aufgeschoben wird. Ein Nachteil ist, dass die Spreizhülse erst beim Aufspreizen in das Bohrloch geschoben wird, es gelangt nicht an den Grund des Lochs. Für ein kurzes Sackloch ist das Befestigungselement deswegen nicht geeignet. Eine Verankerung im Mündungsbereich eines Sacklochs weist niedrigere Haltewerte auf als eine Verankerung am Grund des Sacklochs.

Die US 4,919,579 A offenbart einen Hinterschnitt-Spreizanker mit einer geschlitzten Spreizhülse. die mit einem konischen Spreizkörper in einer hohlkonischen Hinterschneidung eines Sacklochs verankert wird. Diese Verankerung setzt ein hinterschnittenes Loch voraus.

Der Erfindung liegt daher die Aufgabe zugrunde, ein Befestigungselement vorzuschlagen, das in einem nicht hinterschnittenen Sackloch befestigbar ist. Dabei soll ein im Verhältnis zum Durchmesser kurzes Sackloch zur Befestigung genügen.

Diese Aufgabe wird erfindungsgemäß durch die Merkmale des Anspruchs 1 bzw. 12 gelöst. Das erfindungsgemaße Befestigungselement weist eine rohrförmige, ungeschlitrte Spreizhülse auf, die sich auf dem Schaft befindet und auf dem Schaft verschiebbar ist. Zum Verankern im Sackloch wird das Befestigungselement mit dem Spreizkonus voraus in das Sackloch eingesetzt und die Spreizhülse auf den Spreizkonus aufgeschoben. Beim Aufschieben weitet der Spreizkonus die Spreizhülse in deren dem Spreizkonus zugewandten Stirnbereich auf. Der aufgeweitete Stirnbereich drückt sich in eine Lochwandung des Sacklochs ein und verankert dadurch das Befestigungselement im Sackloch. Es entsteht eine form- und kraftschlüssige Verbindung zwischen der im vorderen Stimbereich aufgeweiteten Spreizhülse und dem Sackloch, wodurch eine hohe Verankerungskraft auch in einem kurzen Sackloch erreicht wird. Weiterer Vorteil des erfindungsgemäßen Befestigungselements ist eine Abstützung seines Schafts gegen Querkräfte durch die Spreizhülse im Bohrloch. Des Weiteren zeigt eine bündig im Sackloch versenkte Spreizhülse eine korrekte Verankerung des Befestigungselements an, sofern das Sackloch eine vorgegebene Solltiefe aufweist. Das erfindungsgemäße Befestigungselement ist insbesondere zur Verankerung in Baustahl, Aluminium oder dgl. vorgesehen, es eignet sich aber auch zur Verankerung in anderen Werkstoffen, beispielsweise Beton. Um das Aufschieben der Spreizhülse auf den Spreizkonus und das dadurch bewirkte Aufweiten der Spreizhülse zu erleichtern kann der Spreizkonus mit einem Schmiermittel versehen sein.

Ebenfalls der Erleichterung der Aufweitung der Spreizhülse in ihrem dem Spreizkonus zugewandten Stirnbereich dient eine hohlkonische Aufweitung nach Art einer Fase oder eines Innenkonus auf einer Innenseite einer dem Spreizkonus zugewandten Stirnseite der Spreizhülse. Eine Materialdicke der Spreizhülse ist dadurch in dem beim Aufschieben auf den Spreizkonus sich aufweitenden Stirnbereich der Spreizhülse verringert, wodurch sich die Spreizhülse mit geringerer Kraft aufweiten lässt.

Die hohlkonische Aufweitung der Spreizhülse weist einen spitzeren Konuswinkel als der Spreizkonus auf. Dadurch gelangt die Spreizhülse beim Aufschieben auf den Spreizkonus zuerst mit ihrem dem Spreizkonus zugewandten Stirnende in Kontakt mit dem Spreizkonus. Die Spreizhülse wird zunächst in ihrem vorderen Stirnbereich aufgeweitet und in die Lochwandung gedrückt. Erst mit zunehmendem Aufschieben auf den Spreizkonus setzt sich die Aufweitung der Spreizhülse vom vorderen, dem Spreizkonus zugewandten Stirnbereich beginnend bis in einen etwa mittleren Bereich der axial kurzen Spreizhülse fort. Die Aufweitung der Spreizhülse im vorderen Stirnbereich hat den Vorteil, dass eine Aufweitkraft klein ist, weil die Spreizhülse nur über einen kurzen Teil ihrer axialen Länge aufgeweitet wird, und dass die Kraft, mit der die Spreizhülse in die Lochwandung gedrückt ist, groß ist, weil die Spreizhülse nur im vorderen Stirnbereich und somit mit einer vergleichsweise kleinen Ringfläche in die Lochwandung eingedrückt wird. Als Vorteil ergibt sich eine stabile Verankerung bei vergleichsweise niedriger Aufweitkraft. Dieser Effekt wird unterstützt durch eine dünnwandige Spreizhülse

Zur Erzielung hoher Verankerungswerte hat sich ein Konuswinkel des Spreizkonus im Bereich von etwa 14° bis 20°, vorzugsweise von etwa 17° als günstig gezeigt.

Eine Ausgestaltung der Erfindung sieht eine Aufrauung auf einer Außenseite der Spreizhülse zumindest in deren dem Spreizkonus zugewandten Stirnbereich vor. Die Aufrauung kann beispielsweise ein Kreuzrändel sein, ungeeignet ist eine linienförmige Aufrauung wenn sie achsparallel ist. Beim Aufweiten der Spreizhülse drückt sich die Aufrauung in die Lochwandung des Sacklochs ein und erhöht dadurch die Verankerungskraft. Des Weiteren bewirkt die Aufrauung, wenn sie durch Umformen wie beispielsweise Rändeln hergestellt ist, eine Oberflächenverfestigung der Spreizhülse. Dadurch drückt sich die Aufrauung selbst dann in die Lochwandung ein, wenn die Spreizhülse und ein das Sackloch aufweisendes Bauteil aus Werkstoffen ursprünglich gleicher Härte bestehen.

In bevorzugter Ausgestaltung der Erfindung weist die Spreizhülse einen Stahl großer Härte auf, beispielsweise ist sie aus einem legierten, nicht rostenden Stahl (beispielsweise A4-Stahl) hergestellt. Es genügt auch eine örtlich erhöhte Härte des Stahls außen in dem dem Spreizkonus zugewandten Stirnbereich der Spreizhülse, der sich beim Aufweiten der Spreizhülse in die Lochwandung eindrückt. Mit großer Härte ist insbesondere eine Härte der Spreizhülse gemeint, die größer ist als die Härte von Baustahl, damit sich das Befestigungselement mit hoher Verankerungskraft in Baustahl verankern lässt.

Bei einer Weiterbildung des erfindungsgemäßen Befestigungselements weist der Spreizkonus am Übergang zum Schaft einen größeren Durchmesser als der Schaft auf, der Spreizkonus geht mit einer Ringstufe auf den kleineren Durchmesser des Schafts über. Der Spreizkonus hat also die Form eines Kegelstumpfs. Bei gleichem Durchmesser des Spreizkonus an seiner durchmessergrößeren, dem Schaft abgewandten Grundseite und bei gleichem Konuswinkel des Spreizkonus ist der Spreizkonus axial kürzer. Auch die Spreizhülse lässt sich axial entsprechend dem Spreizkonus kürzer ausbilden. Das Befestigungselement lässt sich dadurch in einem axial noch kürzeren Sackloch verankern, wobei eine Verankerungskraft bei im Übrigen gleichen Verhältnissen nahezu unverändert bleibt. Das erfindungsgemäße Befestigungselement lässt sich somit in einer noch dünneren Werkstückplatte verankern ohne dass die Werkstückplatte durchbohrt oder das Sackloch hinterschnitten werden muss.

Um das Befestigungselement mit kurzer Verankerungstiefe und trotzdem hoher Verankerungskraft verankern zu können, sieht eine Ausgestaltung der Erfindung eine axial kurze Spreizhülse vor, deren Spreizbereich sich über mehr als eine Hälfte ihrer axialen Länge erstreckt. Die axiale Länge des Spreizbereichs entspricht einer axialen Länge des Innenkonus der Spreizhülse und/oder einer axialen Länge der Schlitze, sofern die Spreizhülse Schlitze aufweist. Axial kurz ist im Verhältnis zu einem charakteristischen Durchmesser des Befestigungselements zu verstehen. Charakteristische Durchmesser des Befestigungs-elements sind sein Schaftdurchmesser oder ein Außendurchmesser der unverformten Spreizhülse. Die axiale Länge der Spreizhülse entspricht bei einer Ausgestaltung der Erfindung ungefähr ihrem Außendurchmesser, bei einer weiteren Ausgestaltung der Erfindung sogar nur ungefähr 2/3 des Außendurchmessers.

Eine Ausgestaltung der Erfindung sieht eine dünnwandige Spreizhülse vor. Dabei ist dünnwandig ebenfalls im Verhältnis zu einem charakteristischen Durchmesser des Befestigungselements zu sehen. Eine Wandstärke der Spreizhülse liegt beispielsweise etwa im Bereich von 1/4 bis 1/6 eines Schaftdurchmessers des Befestigungselements. Eine dünnwandige Spreizhülse lässt sich mit geringer Kraft verformen, d.h. eine zum Aufweiten der Spreizhülse erforderliche Kraft ist niedrig und eine Kraft, mit der sich die Spreizhülse in eine Lochwandung eindrückt ist bei vorgegebener Aufweitkraft groß.

Sitzt der Spreizkonus mit seinem dem Schaft abgewandten, im Durchmesser größeren Ende auf einem Grund eines Sacklochs auf, kann es vorkommen, dass die Spreizhülse beim Aufschieben auf den Spreizkonus am Grund des Bohrlochs aufsitzt. Dies ist insbesondere bei einem verhältnismäßig großen Durchmesser des Sacklochs der Fall, wenn ein vergleichsweise großer Ringspalt zwischen dem im Durchmesser größeren Ende des Spreizkonus und einer Lochwandung besteht. Der Grund des Sacklochs behindert das Aufschieben der Spreizhülse auf den Spreizkonus und damit das Aufweiten der Spreizhülse. Folge kann eine verschlechterte Verankerung des Befestigungselements im Sackloch sein. Deswegen sieht eine Ausgestaltung der Erfindung einen axialen Fortsatz des Schafts auf der dem Schaft abgewandten und im Durchmesser größeren Seite des Spreizkonus vor. Der Spreizkonus des erfindungemäßen Befestigungs-elements sitzt dadurch nicht mit seinem im Durchmesser größeren Ende auf dem Grund des Sacklochs auf, sondern es sitzt der axiale Fortsatz am Grund des Sacklochs auf. Der Spreizkonus hat dadurch axialen Abstand vom Grund des Sacklochs, wobei ein kurzer Abstand des Spreizkonus vom Grund des Sacklochs, d.h. ein axial kurzer Fortsatz genügt. Der axiale Fortsatz sollte kurz gehalten werden, um die notwendige Verankerungstiefe und damit die Tiefe des Sacklochs nicht unnötig zu verlängern. Durch den axialen Fortsatz wird ein axialer Abstand zwischen dem Sackloch und der Spreizhülse gewonnen, so dass der Grund des Sacklochs die axiale Verschiebung und damit die Aufweitung der Spreizhülse nicht behindert. Diese Ausgestaltung der Erfindung hat den Vorteil einer verbesserten Verankerbarkeit des Befestigungselements im Sackloch weil ein Grund des Sacklochs das Aufschieben der Spreizhülse auf den Spreizkonus und damit die Verankerung des Befestigungselements im Sackloch nicht behindert.

Um das Aufschieben der Spreizhülse auf den Spreizkonus nicht zu behindern, darf der Fortsatz nicht seitlich über den Spreizkonus vorstehen. Insbesondere weist der Fortsatz keinen größeren Durchmesser als Spreizkonus an seinem durchmessergrößeren Ende auf. Geeignet erscheint ein zylindrischer axialer Fortsatz mit dem gleichen Durchmesser wie dem größeren Durchmesser des Spreizkonus. Auch kann sich der Fortsatz vom Spreizkonus weg verjüngen oder einen kleineren Durchmesser als der Spreizkonus aufweisen. Der axiale Fortsatz muss keinen kreisförmigen Querschnitt aufweisen.

Eine geschlitzte Spreizhülse erleichtert das Aufspreizen bzw. erhöht eine Aufspreizkraft, mit der sich die Spreizhülse in eine Lochwandung eindrückt. Im Vergleich mit einer geschlitzten Spreizhülse hat eine ungeschlitzte Spreizhülse zwar den Nachteil einer größeren Aufweitkraft, jedoch den Vorteil einer größeren und in Umfangsrichtung durchgehenden nicht durch Schlitze unterbrochenen Anlage an der Lochwandung. Es wird eine ungeschlitzte Spreizhülse als erfindungsgemäß angesehen.

Bei einer Ausgestaltung der Erfindung weist der Spreizkörper eine achsparallel oder schräg verlaufende Riffelung zur Drehsicherung zwischen dem Spreizkonus und der Spreizhülse auf. Beim Aufschieben der Spreizhülse auf den Spreizkonus drückt sich die Riffelung des Spreizkonus in die Spreizhülse ein und bildet dadurch eine Drehsicherung. Grundsätzlich kann die Riffelung auch an einer Innenseite der Spreizhülse vorgesehen sein. Die Riffelung verläuft achsparallel oder schräg, hat also auch bei schrägem Verlauf eine achsparallele Komponente und hat damit eine Sperrwirkung gegen eine Relativbewegung zwischen Spreizhülse und Spreizkonus in Umfangsrichtung, d. h. gegen eine Drehung der Spreizhülse gegenüber dem Spreizkonus. Die Drehsicherungswirkung ist bei einer achsparallel verlaufenden Riffelung größer, dafür weist eine schräg verlaufende Riffelung zusätzlich eine Sperrwirkung gegen eine Bewegung in axialer Richtung auf, d. h. eine schräg verlaufende Riffelung hält die auf den Spreizkonus aufgeschobene Spreizhülse in axialer Richtung auf dem Spreizkonus bzw. umgekehrt den Spreizkonus in der Spreizhülse.

Wird ein Bauteil an dem verankerten Befestigungselement schraubend befestigt, übt die Schraubbewegung insbesondere beim Festziehen ein Drehmoment auf den Spreizkonus aus. Die erfindungsgemäße Riffelung erhöht ein vom Spreizkonus auf die Spreizhülse übertragbares Drehmoment, wodurch die Gefahr, dass das beim Befestigen des Bauteils auf den Spreizkonus ausgeübte Drehmoment den Spreizkonus in der Spreizhülse dreht und dadurch lockert, verringert ist. Insbesondere eine schräg verlaufende Riffelung erhöht zusätzlich den Axialsitz des Spreizkonus in der Spreizhülse, wodurch die Gefahr verringert ist, dass der Spreizkonus durch Ausüben einer Axialkraft beim Befestigen des Bauteils gelockert und aus der Spreizhülse herausgedrückt wird. Diese Gefahr besteht insbesondere dann, wenn der Spreizkonus beim Verankern nicht auf einem Bohrlochgrund aufsitzt, beispielsweise bei der Verankerung in einem Durchgangsloch oder in einem tiefen Sackloch.

In bevorzugter Ausgestaltung ist die Riffelung nur auf einem Axialabschnitt des Spreizkonus ausgebildet, der sich an oder nahe an dem durchmessergrößeren Ende des Spreizkonus befindet. Das Aufschieben der Spreizhülse auf den Spreizkonus ist dadurch mit geringer Kraft möglich.

Als Riffelung eignet sich gemäß einer Ausgestaltung der Erfindung eine Kerbung an einer oder mehreren Stellen des Umfangs des Spreizkonus. Durch Einformen der Kerbung werfen sich vergleichsweise scharfkantige Rippen oder Sicken an Seiten der Kerbung auf, die sich beim Aufschieben der Spreizhülse in diese einformen und die gewünschte Drehsicherung bewirken. Die Kerbung ist einfach herstellbar und erhöht eine Aufschiebekraft der Spreizhülse wenig.

Eine andere Ausgestaltung der Erfindung sieht einen Gerad- oder Schrägrändel am Spreizkonus als Riffelung vor. Im Falle eines Schrägrändels verläuft die Schräge insbesondere in der gleichen Richtung wie eine Steigung eines Befestigungsgewindes, allerdings normalerweise mit abweichender Steigung. Auch ein Rändel ist einfach und preisgünstig herstellbar. Kerbung und Rändel können alternativ oder gemeinsam an dem Spreizkonus ausgebildet sein.

Eine Ausgestaltung der Erfindung sieht einen schaftlosen Spreizkonus vor, Der Spreizkonus weist beispielsweise ein Innengewinde zum Eindrehen einer Schraube oder eines Gewindebolzens vor. Schaftlos ist dahingehend zu verstehen, dass der Spreizkonus keinen aus der Spreizhülse vorstehenden Schaft aufweist. Diese Ausgestaltung der Erfindung ermöglicht ein versenktes oder mit einer Oberfläche bündiges Verankern des Befestigungselements in einem Loch. Dies hat den Vorteil, dass kein Schaft aus einem Bauteil vorsteht, in dem das Befestigungselement verankert ist. Eine Riffelung zur Drehsicherung zwischen Spreizkonus und Spreizhülse ist vorteilhaft.

Eine Ausgestaltung der Erfindung sieht eine Verliersicherung vor, die die Spreizhülse bis zur Verankerung des Befestigungselements auf dem Spreizkonus hält. Nach der Verankerung ist die Verliersicherung bedeutungslos. Die Verliersicherung vermeidet, dass sich Spreizhülse und Spreizanker bei Lagerung und Transport voneinander trennen und hält die Spreizhülse in ihrer vorgesehenen Orientierung auf dem Spreizkonus. Die Verliersicherung vermeidet, dass die Spreizhülse verkehrt herum auf den Spreizkonus aufgesetzt wird. Ausreichend ist, dass die Verliersicherung die Spreizhülse gegen Herunterfallen auf dem Spreizkonus hält, eine unlösbare Verbindung ist nicht erforderlich. Die Verliersicherung kann beispielsweise ein Rändel sein, der die Spreizhülse mit (geringer) Klemmkraft auf dem Spreizkonus hält.

Die Ansprüche 12 bis 16 sind auf eine erfindungsgemäße Verankerung des vorstehend erläuterten Befestigungselements in einem Loch in einem Bauteil gerichtet. Diese Ansprüche werden durch die vorstehenden Erörterungen des erfindungsgemäßen Befestigungselements erläutert.

Zum Schutz vor Korrosion sieht eine erfindungsgemäße Anordnung vor, die Spreizhülse beim Verankern des Befestigungselements in einem Loch um beispielsweise etwa 0,5 bis 1 mm zu versenken. Dadurch entsteht eine den Schaft des Befestigungselements umgebende Ringnut auf einer hinteren, dem Spreizkonus abgewandten Stirnseite der Spreizhülse. In die umlaufende Nut wird erfindungsgemäß eine Dichtmasse eingebracht. Korrosion im Loch kann stattfinden, wenn und weil das Befestigungselement aus einem anderen Werkstoff als ein Bauteil besteht, in dem das Befestigungselement verankert ist. Das Befestigungselement bildet ein galvanisches Element mit dem Bauteil. Korrosion kann in diesem Fall auch auftreten, wenn sowohl das Befestigungselement als auch das Bauteil aus an sich nicht rostenden Werkstoffen bestehen, wenn also beispielsweise das Befestigungselement aus A4-Stahl und das Bauteil, in dem das Befestigungselement verankert ist, aus Aluminium (gemeint ist insbesondere eine Aluminiumlegierung) bestehen.

Als Verankerungstiefe genügen etwa ein Durchmesser eines Lochs, in dem das Befestigungselement verankert ist, in weiterer Ausgestaltung der Erfindung genügen sogar etwa 2/3 des Durchmessers des Lochs. Der Durchmesser des Lochs stimmt nahezu mit einem Durchmesser der unverformten Spreizhülse überein, der Durchmesser des Lochs ist vorzugsweise geringfügig größer, um die Spreizhülse mit Spiel in das Loch einbringen zu können. Die geringen Verankerungstiefen lassen sich unabhängig von der Abdichtung am Schaft des Befestigungselements verwirklichen.

Zum Aufweiten der Spreizhülse zur Verankerung des Befestigungselements in einem Loch wird eine Axialkraft auf die Spreizhülse ausgeübt, die die Spreizhülse auf den Spreizkonus schiebt. Eine zur Ausübung der Axialkraft erforderliche Reaktionskraft wird in den Schaft des Befestigungselements eingeleitet. Eine Abstützung zur Aufbringung der Axialkraft erfolgt also am Schaft des Befestigungselements. Es entsteht ein geschlossener Kraftkreislauf ohne dass äußere Kräfte auftreten. Diese Ausgestaltung hat den Vorteil, dass das Befestigungselement nicht gegen die zum Schieben der Spreizhülse auf den Spreizkonus aufzubringende Axialkraft abgestützt werden muss. Ein Bauteil, in dem das Befestigungselement verankert wird, muss also zum Verankern nicht gegengehalten werden, auch wenn das Bauteil eine dünne Platte ist. Des Weiteren lässt sich das Befestigungselement auch in einem tiefen Sackloch oder in einem Durchgangsloch verankern, weil sich der Spreizkonus nicht an einem Lochgrund abstützen muss.

Die Reaktionskraft in den Schaft des Befestigungselements lässt sich einleiten, indem eine Mutter auf den Schaft aufgeschraubt wird. Dazu ist ein Außengewinde des Schafts erforderlich. Durch Drehen der aufgeschraubten Mutter auf dem Schaft wird die Axialkraft auf die Spreizhülse ausgeübt. Zwischen der Mutter und der Spreizhülse kann eine Hülse aufgesetzt sein, die die Axialkraft von der Mutter auf die Spreizhülse überträgt. Die Hülse ist erforderlich, wenn sich ein gewindeloser Schaftabschnitt zwischen der hinteren Stirnseite der Spreizhülse und der Mutter befindet.

Um das Befestigungselement beim Drehen der Mutter auf dem Schaft gegen Mitdrehen halten zu können sieht eine Weiterbildung des erfindungsgemäßen Verfahrens vor, zwei Kontermuttern auf den Schaft zu schrauben und gegeneinander fest zu spannen. An den Kontermuttern kann der Schaft mittels eines Mutterndrehwerkzeugs, beispielsweise eines Gabel- oder Ringschlüssels, drehfest gehalten werden.

Eine Beaufschlagung der Spreizhülse mit Ultraschall zum Aufschieben auf den Spreizkonus ist möglich. Beaufschlagung mit Ultraschall meint eine Anregung der Spreizhülse mit bzw. zu mechanischen Schwingungen im Ultraschallfrequenzbereich. Vorzugsweise sind die Schwingungen axial. Die Verankerung des Befestigungselements mit Ultraschall hat die Vorteile, dass sie leise ist und den Ankergrund wenig belastet. Letzteres macht die Verankerung mit Ultraschall zur Verankerung des Befestigungselements in dünnen Platten ohne Gegenhalten geeignet. Es wird beispielsweise eine rohrförmige Sonotrode über den Schaft des Befestigungswerkzeugs auf den hinteren Stirnrand der Spreizhülse aufgesetzt, die Schwingungen von einem Ultraschallschwinger auf die Spreizhülse überträgt.

Ein Setzwerkzeug kann beispielsweise stiftförmig nach Art eines Durchschlags ausgebildet sein, so dass Hammerschläge auf die Spreizhülse des Befestigungselements übertragbar sind, die die Spreizhülse auf den Spreizkonus schieben, der beispielsweise auf einem Grund des Sacklochs aufsitzt. Mit dem Setzwerkzeug lässt sich die Spreizhülse auch beaufschlagen, wenn sie im Loch versenkt ist.

Die Erfindung wird nachfolgend anhand in der Zeichnung dargestellter Ausführungsbeispiele näher erläutert. Es zeigen:
- Figur 1: ein erstes Ausführungsbeispiel eines erfindungsgemäßen Befestigungselements;
- Figur 2: eine erfindungsgemäße Verankerung des Befestigungselements aus Figur 1 in einem Bauteil.
- Figur 3: ein zweites Ausführungsbeispiel eines erfindungsgemäßen Befestigungselements;
- Figur 4: ein drittes Ausführungsbeispiel eines erfindungsgemäßen Befestigungs-elements im Axialschnitt, wobei auf der linken Seite der unverankerte und auf der rechten Seite der verankerte Zustand gezeigt ist; und
- Figuren 5 und 6: Vergrößerungen der mit Pfeilen V und VI in Figur 4 bezeichneten Einzelheiten, wobei Figur 5 den unverankerten und Figur 6 den verankerten Zustand des Befestigungselements zeigt;
- Figur 7: ein viertes Ausführungsbeispiel eines erfindungsgemäßen Befestigungselements in unverankertem Zustand;
- Figur 8: einen Spreizkonus und eine Spreizhülse eines fünften Ausführungsbeispiels eines erfindungsgemäßen Befestigungselements in Seitenansicht;
- Figur 9: eine Stirnansicht des Spreizkonus gemäß Pfeil IX in Figur 8;
- Figur 10: das Befestigungselement aus Figur 8 in zusammengesetztem Zustand; und
- Figuren 11 bis 13: aufeinanderfolgende Montageschritte des Befestigungs-elements aus Figur 8 unter Zuhilfenahme eines Setzwerkzeugs.

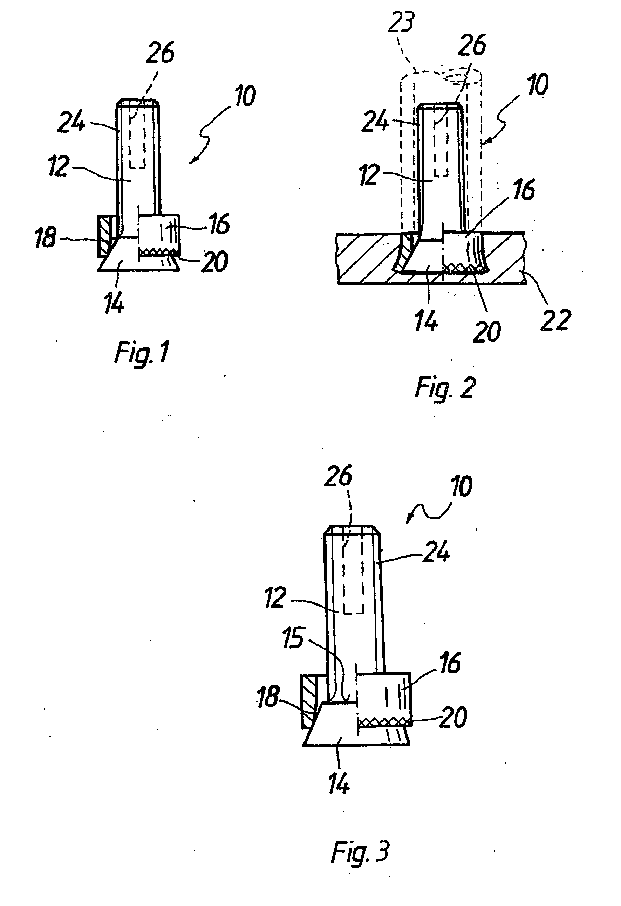

Das in Figur 1 dargestellte, insgesamt mit 10 bezeichnete erfindungsgemäße Befestigungselement weist einen Schaft 12 mit einem Spreizkonus 14 an einem Ende auf, der sich in Richtung vom Schaft 12 weg erweitert. Des Weiteren weist das Befestigungselement 10 eine rohrförmige, ungeschlitzte Spreizhülse 16 auf, die auf dem Schaft 12 verschiebbar ist. Die Spreizhülse 16 und der Schaft 12 mit dem Spreizkonus 14 bestehen aus einem nicht rostenden A4-Stahl, also aus einem Stahl großer Härte.

Die Spreizhülse 16 weist eine hohlkonische Aufweitung 18 nach Art einer Fase auf ihrer Innenseite an ihrer dem Spreizkonus 14 zugewandten Stirnseite auf. Ein Konuswinkel der hohlkonischen Aufweitung 18 ist spitzer als ein Konuswinkel des Spreizkonus 14, der einen Konuswinkel von etwa 17° aufweist. Durch die unterschiedlichen Konuswinkel sitzt die Spreizhülse 16, wenn sie auf den Spreizkonus 14 geschoben wird, zuerst mit ihrem dem Spreizkonus 14 zugewandten Stirnrand auf dem Spreizkonus 14 auf. Die Spreizhülse 16 sitzt also nicht gleich über die gesamte axiale Länge ihrer hohlkonischen Aufweitung 18 mit der hohlkonischen Aufweitung 18 auf dem Spreizkonus 14 auf, wenn sie auf den Spreizkonus 14 aufgeschoben wird. Die Spreizhülse 16 lässt sich dadurch leichter an ihrem dem Spreizkonus 14 zugewandten Stirnrand radial nach außen aufweiten, wenn sie auf den Spreizkonus 14 aufgeschoben wird. Die unterschiedlichen Konuswinkel der hohlkonischen Aufweitung 18 der Spreizhülse 16 und des Spreizkonus 14 sind in der Zeichnung übertrieben stark dargestellt um die unterschiedlichen Konuswinkel und das Aufsitzen der Spreizhülse 16 mit ihrem dem Spreizkonus 14 zugewandten Stirnrand auf dem Spreizkonus 14 zu veranschaulichen. Durch die übertriebene Darstellung des Unterschieds der Konuswinkel ergibt sich in der Zeichnung ein größerer Ringspalt zwischen Spreizhülse 16 und Schaft 12 als es einer maßstäblichen Darstellung entspricht.

Auf ihrer Außenseite ist die Spreizhülse 16 in einem dem Spreizkonus 14 zugewandten Stirnbereich mit einem eine Aufrauung bildenden Kreuzrändel 20 versehen.

Figur 2 zeigt eine erfindungsgemäße Befestigungsanordnung mit Hilfe des in Figur 1 dargestellten Befestigungselements 10. Das Befestigungselement 10 wird mit seinem Spreizkonus 14 in ein ursprünglich zylindrisches, nicht mit Bezugszahl versehenes Sackloch in einem Bauteil, beispielsweise einer Baustahlplatte 22 eingesetzt. Die Spreizhülse 16 wird auf den Spreizkonus 14 aufgeschoben. Das Aufschieben der Spreizhülse 16 auf den Spreizkonus 14 erfolgt beispielsweise mittels eines nicht dargestellten, rohrförmigen Setzwerkzeugs, das über den Schaft 12 auf eine dem Spreizkonus 14 abgewandte Stirnseite der Spreizhülse 16 aufgesetzt wird. Mit Hammerschlägen wird die Spreizhülse 16 auf den Spreizkonus 14 geschoben, wobei in diesem Fall das Aufschieben treffender als Auftreiben bezeichnet wird. Beim Aufschieben auf den Spreizkonus 14 weitet der Spreizkonus 14 die Spreizhülse 16 beginnend an ihrem dem Spreizkonus 14 zugewandten Stirnrand in dem dem Spreizkonus 14 zugewandten Stirnbereich radial nach außen auf. Die Spreizhülse 16 drückt sich aufgrund ihrer größeren Härte in ihrem dem Spreizkonus 14 zugewandten Stirnbereich in eine Lochwandung des ursprünglich zylindrischen und nicht hinterschnittenen Sacklochs ein und verankert das Befestigungselement 10 form- und kraftschlüssig in der Baustahlplatte 22. Beim Aufweiten der Spreizhülse 16 wird auch der Kreuzrändel 20 in die Lochwandung in der Baustahlplatte 22 eingedrückt und verbessert die Verankerung des Befestigungselements 10 in der Baustahlplatte 22.

Ein erfindungsgemäßes Verankerungsverfahren sieht ein Aufschieben der Spreizhülse 16 auf den Spreizkonus 14 durch Ultraschallbeaufschlagung der Spreizhülse 16 vor. Dazu wird wie in Figur 2 mit Strichlinien angedeutet eine rohrförmige Sonotrode 23 über den Schaft 12 auf eine hintere Stirnseite der Spreizhülse 16 aufgesetzt. Die Sonotrode 23 wird von einem nicht dargestellten Ultraschallschwinger zu Axialschwingungen im Ultraschallfrequenzbereich angeregt und überträgt die Schwingungen auf die Spreizhülse 16. Die Spreizhülse 16 wird dadurch auf den Spreizkonus 14 aufgeschoben und aufgeweitet, d. h. aufgespreizt und verankert das Befestigungselement 10 in der Baustahlplatte 22. Das Auftreiben mit Ultraschall ist leise und beansprucht die Baustahlplatte 22 gering, auf einen Gegenhalter zum Abstützen der Baustahlplatte 22 kann verzichtet werden.

Weist das Sackloch in der Baustahlplatte 22 eine vorgegebene Tiefe auf, dann ist die Verankerung des Befestigungselements 10 abgeschlossen, wenn die Spreizhülse 16 bündig in der Baustahlplatte 22 versenkt ist. Auf diese Weise ist eine korrekte Verankerung des Befestigungselements 10 einfach feststellbar.

Die Spreizhülse 16 stützt das Befestigungselement 10 gegen Querbeanspruchungen ab. Dabei ist zu berücksichtigen, dass der Ringspalt zwischen der Spreizhülse 16 und dem Schaft 12 in der Zeichnung übertrieben groß dargestellt ist.

Mit der in Figur 2 dargestellten Befestigungsanordnung ist in einfacher Weise eine Möglichkeit zur Befestigung eines weiteren, nicht dargestellten Bauteils an der Baustahlplatte 22 geschaffen. Zur Befestigung eines solchen anderen Bauteils weist der Schaft 12 ein Gewinde 24 auf. Zusätzlich oder statt des Gewindes 24 kann der Schaft 12 ein axiales Sackloch 26 aufweisen, durch den ein freies Ende des Schafts 12 zur Herstellung einer Nietverbindung nach außen bördelbar ist (nicht dargestellt). Auch kann ein einen Kopf aufweisender Passstift in das Sackloch 26 eingetrieben werden um ein anderes Bauteil an der Baustahlplatte 22 zu befestigen (nicht dargestellt). Eine weitere Möglichkeit ist es, das Sackloch 26 mit einem Innengewinde auszubilden.

Das Befestigungselement 10 benötigt eine nur geringe Verankerungstiefe. Bei einem Durchmesser des Gewindes 24 des Schafts 12 in der Größe M 6 ist ein Durchmesser des Sacklochs in der Baustahlplatte 22 von 8 mm bei einer Sacklochtiefe von 5 bis 6 mm vorgesehen. Es ist eine standardisierte Baureihe der Befestigungselemente 10 mit Schaftdurchmessern von 4, 5, 6, 8 und 10 mm bzw. Gewindedurchmessern des Gewindes 24 von M4, M5, M6, M8 und M10 vorgesehen. Eine Wanddicke der Spreizhülse ist 1 mm, bei den großen Durchmessern ab M8 kann die Wanddicke auch 1,5 mm sein. Ein Außendurchmesser der Spreizhülse 16 und des Lochs in der Baustahlplatte 22 ist damit bei den angegebenen Durchmessern 6, 7, 8, 10 bzw. 11 und 12 bzw. 13 mm. Die entsprechende Mindestverankerungstiefe t ist 3,5 mm bei einem Gewindedurchmesser von M4, 4,0 mm bei einem Gewindedurchmesser von M5 und M6, 6,0 mm bei einem Gewindedurchmesser von M8 und 7,0 mm bei einem Gewindedurchmesser von M10.

Das in Figur 3 dargestellte erfindungsgemäße Befestigungselement 10 weist am Übergang vom Schaft 12 zum Spreizkonus 14 eine Ringstufe 15 auf, an der der Spreizkonus 14 auf einen kleineren Durchmesser des Schafts 12 übergeht. Der Spreizkonus 14 weist also an seinem im Durchmesser kleineren, dem Schaft 12 zugewandten Ende einen größeren Durchmesser als der Schaft 12 auf. Der Spreizkonus 14 ist dadurch axial kürzer als ein Spreizkonus mit gleichem Durchmesser an der dem Schaft 12 abgewandten Grundseite und mit gleichem Konuswinkel. Im Übrigen ist das in Figur 3 dargestellte Befestigungselement 10 gleich ausgebildet wie das in Figur 1 dargestellte, die Erläuterungen zu Figuren 1 und 2 werden in Bezug genommen.

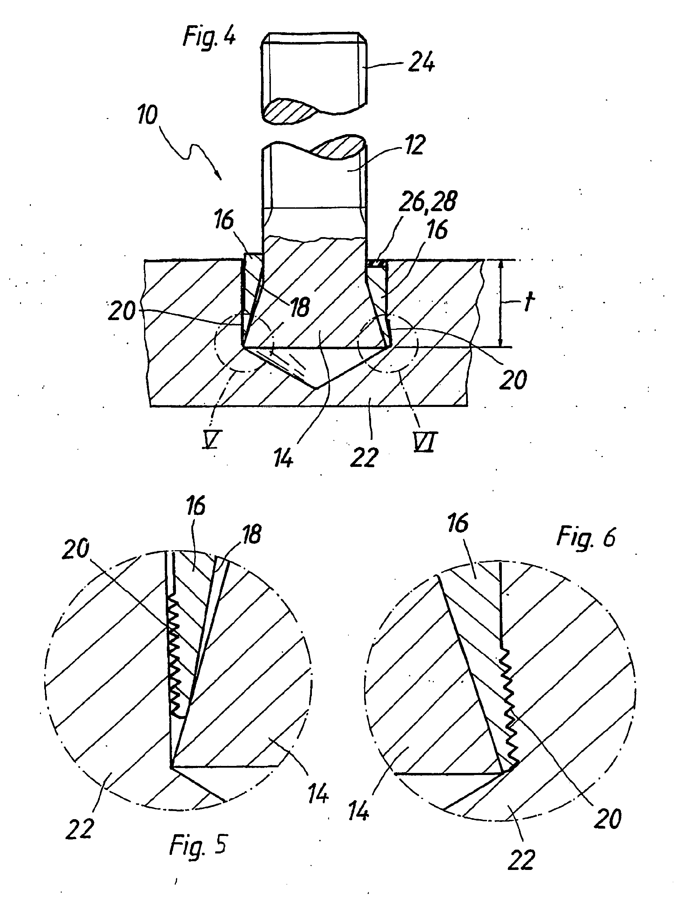

Das in Figur 4 dargestellte erfindungsgemäße Befestigungselement 10 weist ebenso wie die beiden vorstehend erläuterten Befestigungselemente 10 einen Schaft 12 mit einem Spreizkonus 14 an einem Ende auf, der sich in Richtung vom Schaft 12 weg erweitert.

Die Spreizhülse 16 weist einen Innenkonus 18 auf, der sich in gleicher Richtung wie der Spreizkonus 14, also in Richtung des Spreizkonus 14 erweitert. Der Innenkonus 18 ist axial länger als die hohlkonische Aufweitung 18 der Spreizhülse 16 der vorstehend erläuterten Befestigungselemente 10 Der Innenkonus 18 durchsetzt die Spreizhülse 16 auf einem überwiegenden Teil ihrer axialen Länge. Ein Konuswinkel des Innenkonus 18 ist spitzer als ein Konuswinkel des Spreizkonus 14, der einen Konuswinkel von etwa 17° aufweist. Durch die unterschiedlichen Konuswinkel sitzt die Spreizhülse 16, wenn sie auf den Spreizkonus 14 geschoben wird, zuerst mit ihrem dem Spreizkonus 14 zugewandten Stirnrand auf dem Spreizkonus 14 auf. Dies ist in Figur 4 links und in der Vergrößerung in Figur 5 zu sehen, die beide den unverankerten Zustand zeigen. Die Spreizhülse 16 sitzt also nicht gleich über ihre gesamte axiale Länge mit ihrem Innenkonus 18 auf dem Spreizkonus 14 auf, wenn sie auf den Spreizkonus 14 geschoben wird. Die Spreizhülse 16 lässt sich dadurch leichter an ihrem dem Spreizkonus 14 zugewandten Stirnrand radial nach außen aufweiten, wenn sie auf den Spreizkonus 14 aufgeschoben wird.

Die rechte Seite von Figur 4 und die Vergrößerung in Figur 6 zeigen eine erfindungsgemäße Befestigungsanordnung mit dem Befestigungselement 10, d. h. den verankerten Zustand des Befestigungselements 10. Das Befestigungselement 10 wird mit seinem Spreizkonus 14 in ein ursprünglich zylindrisches, nicht mit Bezugszahl versehenes Sackloch in einem Bauteil, beispielsweise einer Baustahlplatte 22 eingesetzt. Die Spreizhülse 16 ist auf den Spreizkonus 14 aufgeschoben.

Eine andere Möglichkeit, um die Spreizhülse 16 aufzuweiten, besteht darin, ein nicht dargestelltes Rohrstück auf den Schaft 12 aufzusetzen und eine ebenfalls nicht dargestellte Mutter auf ein Gewinde 24 des Schafts 12 zu schrauben. Über das Rohr übt die Mutter eine Axialkraft auf die Spreizhülse 16 aus, die die Spreizhülse 16 auf den Spreizkonus 14 schiebt und aufweitet und dadurch das Befestigungselement 10 in vorstehend beschriebener Weise in dem Loch in der Baustahlplatte 22 verankert. Dieses Verankerungsverfahren hat den Vorteil, dass keine äußeren Kräfte wirken, d. h. das Befestigungselement 10 muss nicht auf einem Grund des Lochs, in dem es verankert wird, aufsitzen und das Befestigungselement 10 muss nicht gegen die zum Aufweiten auf die Spreizhülse 16 ausgeübte Axialkraft abgestützt werden. Die Baustahlplatte 22 muss deswegen nicht abgestützt werden, wie es beim Aufweiten der Spreizhülse 16 mit Hammerschlägen der Fall ist. Außerdem ermöglicht das beschriebene Verankerungsverfahren eine Verankerung in einem tiefen Sackloch, in dem das Befestigungselement 10 nicht auf einem Lochgrund aufsitzt, oder die Verankerung in einem Durchgangsloch.

Zur Abdichtung des Lochs in der Baustahlplatte 22 wird die Spreizhülse 16 wie auf der rechten Seite von Figur 1 zu sehen, um beispielsweise etwa 0,5 bis 1 mm in die Baustahlplatte 22 versenkt. Dadurch ergibt sich eine den Schaft 12 des Befestigungselements 10 umschließende Ringnut 26, die mit einer Dichtmasse 28 gefüllt wird.

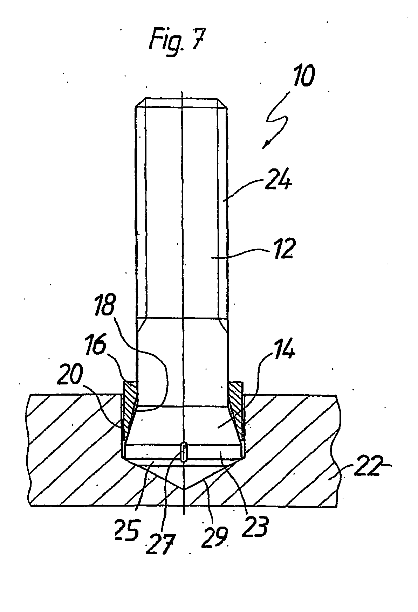

Der Spreizkonus 14 mit dem Schaft 12 und die Spreizhülse 16 des in Figur 7 dargestellten Befestigungselements 10 stimmen mit dem in Figur 1 dargestellten Ausführungsbeispiels überein. Die obenstehenden Erläuterungen werden in Bezug genommen. Auf einer dem Schaft 12 abgewandten, durchmessergrößeren Seite des Spreizkonus 14 weist der Schaft 12 bzw. der Spreizkonus 14 einen axialen Fortsatz 23 auf. Der Fortsatz 23 ist zylindrisch und weist den gleichen Durchmesser wie das durchmessergrößere Ende des Spreizkonus 14 auf. Der Fortsatz 23 ist axial kurz, er weist in axialer Richtung nur einen Bruchteil der Länge des Spreizkonus 14 auf. Der Spreizkonus 14 ist axial kürzer als ein Durchmesser des Schafts 12. Der axiale Fortsatz 23 endet mit einer Fase 25. Eine achsparallel verlaufende, wulstförmige Drehsicherungsrippe 27 wirkt einem Verdrehen des Schafts 12 und des Spreizkonus 14 in der Spreizhülse 16 entgegen.

Der axiale Fortsatz 23, der den Spreizkonus 14 beim Aufschieben der Spreizhülse 16 am Grund 29 des Bohrlochs abstützt, bewirkt einen axialen Abstand der Spreizkonus 14 vom Grund 29 des Bohrlochs. Dadurch wird ein axialer Freiraum zwischen der Spreizhülse 16 und dem Grund 29 des Bohrlochs geschaffen, die Spreizhülse 16 sitzt beim Aufschieben auf den Spreizkonus 14 nicht auf dem Grund 29 des Bohrlochs auf. Das Aufweiten der Spreizhülse 16 wird deswegen nicht durch den Grund 29 des Bohrlochs behindert.

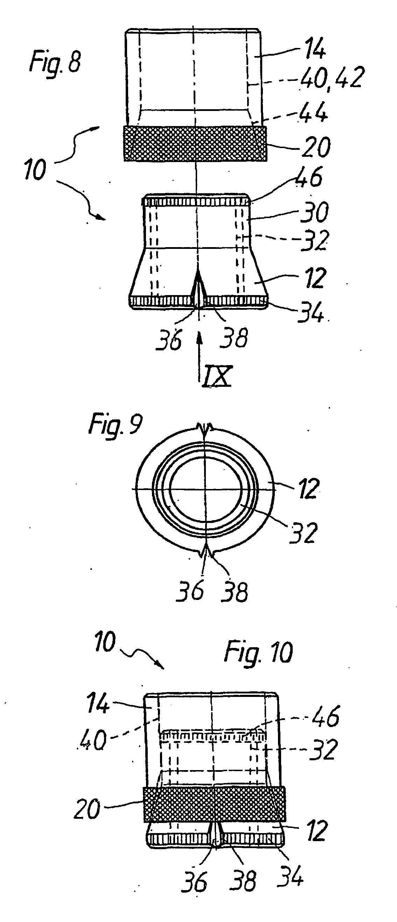

Das in Figuren 8 und 9 dargestellte, Befestigungselement 10 weist einen Spreizkonus 12 und eine Spreizhülse 14 auf. Beide bestehen aus einem Stahl großer Härte, insbesondere aus einem legierten, nicht rostenden Stahl (beispielsweise A4-Stahl). Der Spreizkonus 12 weist außer dem Konus einen zylindrischen Abschnitt 30 am durchmesserkleineren Ende des Konus auf. Des Weiteren weist der Spreizkonus 12 ein koaxiales Durchgangsloch mit Innengewinde 32 auf. In einem axial kurzen Abschnitt am durchmessergrößeren Ende des Spreizkonus 12 ist ein Schräg- oder Geradrändel 34 ausgebildet, in der Zeichnung ist ein Geradrändel dargestellt. Außerdem sind an zwei einander gegenüberliegenden Stellen des Umfangs des Spreizkonus 12 achsparallele Kerben 36 eingeformt, die an ihren Seiten vom Spreizkonus 12 nach außen stehende, scharfkantige Rippen 38 bilden. Die Kerben 36 beginnen am durchmessergrößeren Ende des Spreizkonus 12 und laufen axial ungefähr in einer Mitte des Spreizkonus 12 aus.

Die ungeschlitzte Spreizhülse 14 weist ein zum Spreizkonus 12 und dessen zylindrischen Abschnitt 16 komplementäres Durchgangsloch 40 auf, d. h. das Durchgangsloch 40 der Spreizhülse 14 weist einen zylindrischen Abschnitt 42 und einen konischen Abschnitt 44 auf, deren Durchmesser den Durchmessern des Spreizkonus 12 und dessen zylindrischem Abschnitt 30 entsprechen. Auf einer Außenseite weist die Spreizhülse 14 einen umlaufenden Kreuzrändel 20 auf, der sich von einem Stirnende der Spreizhülse 14 über einen Axialabschnitt erstreckt, der kürzer als der konische Abschnitt 44 des Durchgangslochs 40 ist. Beim Verankern drückt sich der Kreuzrändel 20 wie bereits beschrieben in eine Lochwandung ein und verbessert dadurch die Verankerung des Befestigungselements 10 durch Formschluss.

Ein Rändel 46 am zylindrischen Abschnitt 30 des Spreizkonus 12 hält die Spreizhülse 14 klemmend gegen Herunterfallen auf den Spreizkonus 12. Der Rändel 46 bildet eine Verliersicherung der Spreizhülse 14 auf dem Spreizkonus 12, die das Aufschieben der Spreizhülse 14 auf den Spreizkonus 12 nicht verhindert.

Figur 10 zeigt das aus Spreizkonus 12 und Spreizhülse 14 zusammengesetzte Befestigungselement 10. Eine axiale Länge des Befestigungselements 10 liegt in einer Größenordnung seines Außendurchmessers, das Befestigungselement 10 ist damit axial im Verhältnis zu seinem Durchmesser kurz und lässt sich in einem kurzen, nicht hinterschnittenen Sackloch verankern.

Der Spreizkonus 12 des in Figuren 8 bis 10 dargestellten Befestigungselements 10 ist schaftlos, d. h. er weist keinen Gewindeschaft oder dgl. zur Befestigung eines Bauteils auf, zur Befestigung eines Bauteils dient das Innengewinde 32.

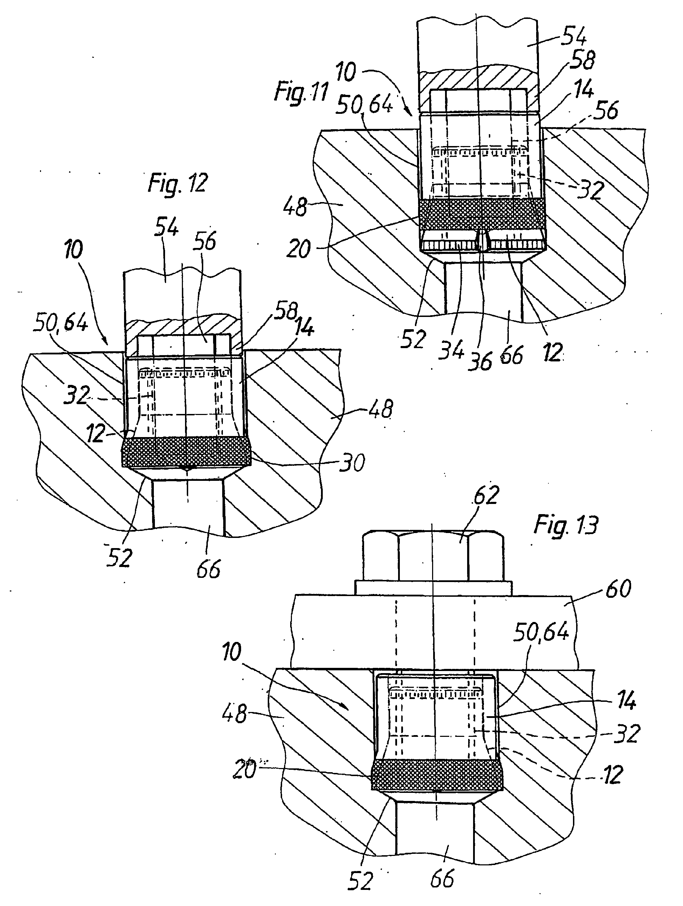

Zur Verankerung in einem Bauteil, beispielsweise einer Aluminiumplatte 48 wird das Befestigungselement 10 in ein Loch 50 in der Aluminiumplatte 48 eingesetzt, so dass der Spreizkonus 12 auf einen Lochgrund oder, im dargestellten Ausführungsbeispiel, auf einer (konischen) Ringschulter 52 des Lochs 50 aufsitzt (Figur 11). Die Spreizhülse 14 wird auf den Spreizkonus 12 aufgeschoben und dadurch zumindest im konischen Bereich aufgeweitet. Das Aufweiten der Spreizhülse 14 durch Aufschieben auf den Spreizkonus 12 kann auch als Aufspreizen bezeichnet werden. Die Spreizhülse 14 wird dadurch gegen eine Lochwand gedrückt, ihr Kreuzrändel 20 formt sich in die Lochwandung ein, so dass das Befestigungselement 10 durch Kraft- und Reibschluss im Loch 50 verankert ist (Figur 12). Da der Spreizkonus 12 schaftlos ist, steht das Befestigungselement 10 nicht aus der Aluminiumplatte 48 vor.

Zum Aufschieben der Spreizhülse 14 auf den Spreizkonus 12 ist das in Figuren 11 und 12 dargestellte Setzwerkzeug 54 vorgesehen. Das Setzwerkzeug 54 ist ein zylinderförmiger Stahlstift, dessen Durchmesser einem Durchmesser der Spreizhülse 14 entspricht. Das Setzwerkzeug 54 weist einen axialen Zentrierdorn 56 und einen den Zentrierdorn 56 umgebenden, rohrförmigen Kragen 58 auf. Ein Durchmesser des Zentrierdorns 56 ist nicht größer als ein Innendurchmesser des Innengewindes 32 des Spreizkonus 12. Beim Aufsetzen des Setzwerkzeug 54 auf die Spreizhülse 14 taucht der Zentrierdorn 56 in das Innengewinde 32 ein und positioniert dadurch das Setzwerkzeug 54 am Befestigungselement 10. Mit dem Kragen 58 sitzt das Setzwerkzeug 54 auf einer Stirnfläche der Spreizhülse 14 auf. Außen- und Innendurchmesser des Kragens 58 entsprechen dem Außen-und Innendurchmesser der Spreizhülse 14. Durch Hammerschläge auf das auf die Spreizhülse 14 aufgesetzte Setzwerkzeug 54 lässt sich die Spreizhülse 14 auf den Spreizkonus 12 aufschieben, dieses Aufschieben kann als Auftreiben bezeichnet werden. Durch das Setzwerkzeug 54 lässt sich die Spreizhülse 14 im Loch 50 versenkt verankern, das Befestigungselement 10 steht nicht aus der Aluminiumplatte 48 vor.

Die Befestigung eines Bauteils, beispielsweise eines Stahlprofils 60 an dem im Loch 50 in der Aluminiumplatte 48 verankerten Befestigungselement 10 erfolgt beispielsweise mit einer durch das Stahlprofil 60 durchgesteckten Schraube 62, die in das Innengewinde 32 des Spreizkonus 12 eingedreht wird. Beim Eindrehen zieht die Schraube 62 den Spreizkonus 12 tiefer in die Spreizhülse 14 ein, so dass die Spreizhülse 14 stärker aufgeweitet und verankert wird. Der Rändel 20 und die Kerbung 36 mit den Rippen 38 des Spreizkonus 12 drücken sich beim Aufschieben der Spreizhülse 14 auf den Spreizkonus 12 bzw. umgekehrt beim Einziehen des Spreizkonus 12 in die Spreizhülse 14 in letztere ein, sie bilden eine Drehsicherung, die verhindert, dass sich der Spreizkonus 12 beim Eindrehen der Schraube 62 in der Spreizhülse 14 dreht und dadurch lockert.

Das Loch 50 weist einen Verankerungsabschnitt 64 mit dem Durchmesser der Spreizhülse 14 auf, in dem das Befestigungselement 10 verankert ist. Mit der Ringschulter 52 verkleinert sich das Loch 50 in einen axialen Fortsatz 66, dessen Durchmesser mindestens so groß wie ein Außendurchmesser des Innengewindes 32 des Spreizkonus 12 bzw. eines Gewindes der Schraube 62 ist. Der Fortsatz 66 des Lochs 50 ermöglicht ein Durchschrauben der Schraube 62 durch den Spreizkonus 12 ohne dass die Schraube 62 an einem Lochgrund aufsitzt und das Befestigungselement 10 in Richtung aus dem Loch 50 heraus beaufschlagt. Diese Ausgestaltung hat den Vorteil, dass eine im Prinzip beliebig lange Schraube 62 verwendet werden kann.

## Patentansprüche

1. Befestigungselement zur Verankerung in einem kurzen, nicht hinterschnittenen Sackloch, mit einem Schaft (12), der einen Spreizkonus (14) an einem Ende aufweist, der sich in Richtung vom Schaft (12) weg erweitert, und mit einer ungeschlitzten, rohrförmigen Spreizhülse (16), durch die der Schaft (12) hindurchgreift und die zum Aufweiten und Verankern im Sackloch auf den Spreizkonus (14) aufschiebbar ist, so dass sie sich in einem dem Spreizkonus (14) zugewandten Stirnbereich aufweitet, **dadurch gekennzeichnet, dass** die Spreizhülse (16) eine hohlkonische Aufweitung (18) auf einer Innenseite ihrer dem Spreizkonus (14) zugewandten Stirnseite aufweist, , derart, dass die hohlkonische Aufweitung (18) der Spreizhülse (16) vor dem Aufschieben auf den Spreizkonus (14) einen spitzeren Konuswinkel als der Spreizkonus (14) aufweist.

2. Befestigungselement nach Anspruch 1, **dadurch gekennzeichnet, dass** der Spreizkonus (14) einen Konuswinkel von etwa 14° bis 20°, vorzugsweise von etwa 17° aufweist.

3. Befestigungselement nach Anspruch 1, **dadurch gekennzeichnet, dass** die Spreizhülse (16) eine Aufrauung (20) an ihrer Außenseite in ihrem dem Spreizkonus (14) zugewandten Stirnbereich aufweist.

4. Befestigungselement nach Anspruch 1, **dadurch gekennzeichnet, dass** das Befestigungselement (10) zumindest außen in dem dem Spreizkonus (14) zugewandten Stirnbereich der Spreizhülse (16) einen Stahl großer Härte aufweist.

5. Befestigungselement nach Anspruch 1 **dadurch gekennzeichnet, dass** der Spreizkonus (14) am Übergang zum Schaft (12) einen größeren Durchmesser als der Schaft (12) aufweist und dass der Spreizkonus (14) mit einer Ringstufe (15) auf den kleineren Durchmesser des Schafts übergeht.

6. Befestigungselement nach Anspruch 1, **dadurch gekennzeichnet, dass** die Spreizhülse (16) axial kurz ist und einen Spreizbereich aufweist, der sich über mehr als eine Hälfte einer axialen Länge der Spreizhülse (16) erstreckt.

7. Befestigungselement nach Anspruch 1, **dadurch gekennzeichnet, dass** das Befestigungselement (10) eine dünnwandige Spreizhülse (16) aufweist.

8. Befestigungselement nach Anspruch 1, **dadurch gekennzeichnet, dass** der Schaft (12) einen axialen Fortsatz (23) auf einer dem Schaft (12) abgewandten Seite des Spreizkonus (14) zum Abstützen des Spreizkonus (14) an einem Grund (29) des Sacklochs beim Aufschieben der Spreizhülse (16) aufweist.

9. Befestigungselement nach Anspruch 8, **dadurch gekennzeichnet, dass** der Fortsatz (23) seitlich nicht über den Spreizkonus (14) vorsteht.

10. Befestigungselement nach Anspruch 1, **dadurch gekennzeichnet, dass** der Spreizkonus (14) eine achsparallel oder schräg verlaufende Riffelung (34, 36, 38) zur Drehsicherung zwischen Spreizkonus (14) und Spreizhülse (16) aufweist.

11. Befestigungselement nach Anspruch 1, **dadurch gekennzeichnet, dass** der Spreizkonus (14) eine Verliersicherung (46) zum Halten der Spreizhülse (16) auf dem Spreizkonus (14) aufweist.

12. Anordnung mit einem, Befestigungselement (10) nach einem der Ansprüche 1-1 das in einem nicht hinterschnittenen Loch in einem Bauteil (22) verankert ist, wobei das Befestigungselement (10) den Schaft (12) mit dem Spreizkonus (14), an einem Ende, der sich in Richtung vom Schaft (12) weg erweitert, und die ungeschlitzte, rohrförmige Spreizhülse (16), durch die der Schaft (12) durchgreift und die auf den im Loch des Bauteils (22) befindlichen Spreizkonus (14) aufgeschoben ist, so dass die Spreizhülse (16) in dem dem Spreizkonus (14) zugewandten Stirnbereich aufgeweitet und in eine Lochwandung des Lochs im Bauteil (22) eingedrückt und das Befestigungselement (10) im Bauteil (22) verankert ist, aufweist, **dadurch gekennzeichnet, dass** die hohlkonische Aufweitung (18) der Spreizhülse (16) vor dem Aufschieben auf den Spreizkonus (14) einen spitzeren Konuswinkel als der Spreizkonus (14) aufweist.

13. Anordnung nach Anspruch 12, **dadurch gekennzeichnet, dass** die Spreizhülse (16) zumindest außen in ihrem dem Spreizkonus (14) zugewandten und in die Lochwandung des Bauteils (22) eingedrückten Stirnbereich eine größere Härte als das Bauteil (22) aufweist.

14. Anordnung nach Anspruch 12, **dadurch gekennzeichnet, dass** eine Verankerungstiefe des Befestigungselements (10) im Loch im Bauteil (22) nicht größer, sondern vorzugsweise kleiner als ein Durchmesser des Lochs ist.

15. Anordnung nach Anspruch 12, **dadurch gekennzeichnet, dass** die Spreizhülse (16) im Loch im Bauteil (22) versenkt ist und dass eine durch das Versenken der Spreizhülse (16) gebildete, den Schaft (12) umschließende Ringnut (26) eine Dichtmasse (28) aufweist.

16. Anordnung nach Anspruch 12, **dadurch gekennzeichnet, dass** der Spreizkonus (14) ein Innengewinde (32) aufweist, dass das Loch (50) im Bauteil (48) gestuft ist und einen Verankerungsabschnitt (64) aufweist, dessen Durchmesser einem Außendurchmesser der Spreizhülse (16) entspricht und in dem der Spreizkonus (14) und die Spreizhülse (16) verankert sind, und dass das Loch (50) einen axialen Fortsatz (66) aufweist, dessen Durchmesser kleiner als der Durchmesser des Verankerungsabschnitts (64) und dessen Durchmesser mindestens so groß wie ein Außendurchmesser des Innengewindes (32) des Spreizkonus (14) ist.

## Claims

1. Fixing element for anchoring in a short, non-undercut, blind hole, having a shank (12) which has at one end an expander cone (14) which widens in the direction away from the shank (12), and having a non-slotted, tubular expansion sleeve (16), through which the shank (12) extends and which is arranged to be pushed up onto the expander cone (14) for widening out and anchoring in the blind hole so that it widens out in an end region towards the expander cone 14, **characterised in that** the expansion sleeve (16) has on the inside of its end face towards the expander cone (14) a hollow conical widening-out (18) such that, before being pushed up onto the expander cone (14), the hollow conical widening-out (18) of the expansion sleeve (16) has a more acute cone angle than the expander cone (14).

2. Fixing element according to claim 1, **characterised in that** the expander cone (14) has a cone angle of from about 14° to 20°, preferably of about 17°.

3. Fixing element according to claim 1, **characterised in that** the expansion sleeve (16) has a roughened region (20) on the outside in its end region towards the expander cone (14).

4. Fixing element according to claim 1, **characterised in that** the fixing element (10) comprises at least on the outside in the end region of the expansion sleeve (16) towards the expander cone (14) a steel of high hardness.

5. Fixing element according to claim 1, **characterised in that** the expander cone (14) has, at the transition to the shank (12), a larger diameter than the shank (12); and **in that** the transition from the expander cone (14) to the smaller diameter of the shank is effected by means of an annular step (15).

6. Fixing element according to claim 1, **characterised in that** the expansion sleeve (16) is axially short and has an expansion region which extends over more than half of the axial length of the expansion sleeve (16).

7. Fixing element according to claim 1, **characterised in that** the fixing element (10) has a thin-walled expansion sleeve (16).

8. Fixing element according to claim 1, **characterised in that** the shank (12) has an axial prolongation (23) on that side of the expander cone (14) which is remote from the shank (12), for supporting the expander cone (14) on the bottom (29) of the blind hole when the expansion sleeve (16) is being pushed up.

9. Fixing element according to claim 8, **characterised in that** the prolongation (23) does not project laterally beyond the expander cone (14).

10. Fixing element according to claim 1, **characterised in that,** for preventing rotation between the expander cone (14) and the expansion sleeve (16), the expander cone (14) has fluting (34, 36, 38) that extends axially parallel or obliquely.

11. Fixing element according to claim 1, **characterised in that** the expander cone (14) has a retaining means (46) for holding the expansion sleeve (16) on the expander cone (14).

12. Arrangement having a fixing element (10) according to one of claims 1 to 11 which is anchored in a non-undercut hole in a component (22), wherein the fixing element (10) comprises the shank (12) having at one end the expander cone (14), which widens in the direction away from the shank (12), and the non-slotted, tubular expansion sleeve (16), through which the shank (12) extends and which is pushed up onto the expander cone (14) located in the hole in the component (22) so that the expansion sleeve (16) is widened out in the end region towards the expander cone (14) and pressed into the wall of the hole in the component (22) and the fixing element (10) is anchored in the component (22), **characterised in that,** before being pushed up onto the expander cone (14), the hollow conical widening-out (18) of the expansion sleeve (16) has a more acute cone angle than the expander cone (14).

13. Arrangement according to claim 12, **characterised in that** the expansion sleeve (16), at least on the outside in its end region towards the expander cone (14) and pressed into the wall of the hole in the component (22), has a greater hardness than the component (22).

14. Arrangement according to claim 12, **characterised in that** the anchoring depth of the fixing element (10) in the hole in the component (22) is not greater than but preferably smaller than the diameter of the hole.

15. Arrangement according to claim 12, **characterised in that** the expansion sleeve (16) is recessed in the hole in the component (22); and **in that** an annular groove (26) formed by the recessing of the expansion sleeve (16) and surrounding the shank (12) has a sealing mass (28).

16. Arrangement according to claim 12, **characterised in that** the expander cone (14) has an internal thread (32); **in that** the hole (50) in the component (48) is stepped and has an anchoring portion (64), the diameter of which corresponds to the external diameter of the expansion sleeve (16) and in which the expander cone (14) and expansion sleeve (16) are anchored; and **in that** the hole (50) has an axial prolongation (66), the diameter of which is smaller than the diameter of the anchoring portion (64) and the diameter of which is at least as large as the external diameter of the internal thread (32) of the expander cone (14).

## Revendications

1. Elément de fixation conçu pour être ancré dans un trou borgne court non contre-dépouillé, comprenant une tige (12) munie, à une extrémité, d'un cône d'expansion (14) qui s'élargit dans une direction l'éloignant de ladite tige (12), et une douille tubulaire expansible (16) non fendue, que ladite tige (12) parcourt de part en part et qui peut être enfilée sur ledit cône d'expansion (14), en vue du déploiement et de l'ancrage dans ledit trou borgne, de telle sorte qu'elle se déploie dans une région frontale tournée vers ledit cône d'expansion (14), **caractérisé par le fait que** la douille expansible (16) comporte un évasement tronconique creux (18) sur une face intérieure de son côté extrême pointant vers le cône d'expansion (14), de façon telle que ledit évasement tronconique creux (18) de ladite douille expansible (16) présente, préalablement à l'enfilement sur ledit cône d'expansion (14), un angle de conicité plus aigu que celui dudit cône d'expansion (14).

2. Elément de fixation selon la revendication 1, **caractérisé par le fait que** le cône d'expansion (14) présente un angle de conicité d'environ 14° à 20°, de préférence d'environ 17°.

3. Elément de fixation selon la revendication 1, **caractérisé par le fait que** la douille expansible (16) est pourvue d'une rugosité (20) à sa face extérieure, dans sa région frontale tournée vers le cône d'expansion (14).

4. Elément de fixation selon la revendication 1, **caractérisé par le fait que** ledit élément de fixation (10) est muni, au moins extérieurement, d'un acier de haute dureté dans la région frontale de la douille expansible (16) qui est tournée vers le cône d'expansion (14).

5. Elément de fixation selon la revendication 1, **caractérisé par le fait que** le cône d'expansion (14) présente un plus fort diamètre que la tige (12) à la transition avec ladite tige (12) ; et **par le fait que** ledit cône d'expansion (14) fusionne, par un épaulement annulaire (15), dans le diamètre de ladite tige offrant un dimensionnement moindre.

6. Elément de fixation selon la revendication 1, **caractérisé par le fait que** la douille expansible (16) est courte, dans le sens axial, et comporte une zone d'expansion s'étendant sur plus d'une moitié d'une longueur axiale de ladite douille expansible (16).

7. Elément de fixation selon la revendication 1, **caractérisé par le fait que** ledit élément de fixation (10) est muni d'une douille expansible (16) à paroi mince.

8. Elément de fixation selon la revendication 1, **caractérisé par le fait que** la tige (12) est pourvue d'un prolongement axial (23), sur un côté du cône d'expansion (14) tourné à l'opposé de ladite tige (12), afin de conférer un appui audit cône d'expansion (14), contre un fond (29) du trou borgne, lors de l'enfilement de la douille expansible (16).

9. Elément de fixation selon la revendication 8, **caractérisé par le fait que** le prolongement (23) ne fait pas saillie latéralement au-delà du cône d'expansion (14).

10. Elément de fixation selon la revendication 1, **caractérisé par le fait que** le cône d'expansion (14) est muni d'un striage (34, 36, 38) parallèle à l'axe, ou s'étendant à l'oblique, en vue de procurer un arrêt rotatoire entre ledit cône d'expansion (14) et la douille expansible (16).

11. Elément de fixation selon la revendication 1, **caractérisé par le fait que** le cône d'expansion (14) est muni d'un moyen (46) de retenue positive, en vue de retenir la douille expansible (16) sur ledit cône d'expansion (14).

12. Dispositif comprenant un élément de fixation (10) conforme à l'une des revendications 1-11, ancré dans un trou borgne non contre-dépouillé pratiqué dans une pièce structurelle (22), ledit élément de fixation (10) comportant la tige (12) munie, à une extrémité, du cône d'expansion (14) s'élargissant dans une direction l'éloignant de ladite tige (12), et la douille tubulaire expansible (16) non fendue, que ladite tige (12) parcourt de part en part et qui est enfilée sur ledit cône d'expansion (14) logé dans le trou de la pièce structurelle (22), de telle sorte que ladite douille expansible (16) soit déployée dans la région frontale tournée vers ledit cône d'expansion (14) et soit enfoncée dans une paroi dudit trou pratiqué dans ladite pièce structurelle (22), et que ledit élément de fixation (10) soit ancré dans ladite pièce structurelle (22), **caractérisé par le fait que** l'évasement tronconique creux (18) de la douille expansible (16) présente, préalablement à l'enfilement sur le cône d'expansion (14), un angle de conicité plus aigu que celui dudit cône d'expansion (14).

13. Dispositif selon la revendication 12, **caractérisé par le fait que** la douille expansible (16) présente une dureté supérieure à celle de la pièce structurelle (22), au moins extérieurement, dans sa région frontale tournée vers le cône d'expansion (14) et enfoncée dans la paroi du trou de ladite pièce structurelle (22).

14. Dispositif selon la revendication 12, **caractérisé par le fait qu'**une profondeur d'ancrage de l'élément de fixation (10), dans le trou pratiqué dans la pièce structurelle (22), n'est pas supérieure, mais de préférence inférieure à un diamètre dudit trou.

15. Dispositif selon la revendication 12, **caractérisé par le fait que** la douille expansible (16) est encaissée dans le trou pratiqué dans la pièce structurelle (22) ; et **par le fait qu'**une rainure annulaire (26), ceinturant la tige (12) et formée par l'encaissement de ladite douille expansible (16), comporte une masse d'étanchement (28).

16. Dispositif selon la revendication 12, **caractérisé par le fait que** le cône d'expansion (14) est pourvu d'un filetage intérieur (32) ; **par le fait que** le trou (50), pratiqué dans la pièce structurelle (48), est étagé et comporte un tronçon d'ancrage (64) dont le diamètre correspond à un diamètre extérieur de la douille expansible (16), et dans lequel ledit cône d'expansion (14) et ladite douille expansible (16) sont ancrés ; et **par le fait que** ledit trou (50) est doté d'un prolongement axial (66) dont le diamètre est plus petit que le diamètre dudit tronçon d'ancrage (64), et dont le diamètre est au moins égal à un diamètre extérieur dudit filetage intérieur (32) dudit cône d'expansion (14).
